# EUROPEAN PATENT SPECIFICATION

(11) **EP 3 010 713 B1**
(45) Date of publication and mention of the grant of the patent: **10.04.2019**
(21) Application number: 14705437.3
(22) Date of filing: 28.01.2014
(51) Int. Cl.: B32B 5/26, B32B 5/28

(54) **HYBRID GLASS FIBERS CARBON FIBERS THERMOPLASTIC COMPOSITES**
THERMOPLASTISCHE VERBUNDWERKSTOFFE AUF BASIS VON GLASFASERN UND CARBONFASERN
COMPOSITES THERMOPLASTIQUES HYBRIDES À BASE DE FIBRES DE VERRE ET DE FIBRES DE CARBONE

(30) Priority: 18.06.2013 US 201361836264 P
(43) Date of publication of application: 27.04.2016
(73) Proprietor: E. I. du Pont de Nemours and Company, Wilmington, DE 19805 (US)
(72) Inventor: SAUER, Bryan Benedict, Boothwyn, PA 19061 (US); WAKEMAN, Martyn Douglas, 1196 Gland (CH)
(74) Representative: Morf, Jan Stefan
(86) International application number: PCT/US2014/013259
(87) International publication number: WO 2014/204522

(56) References cited:
- WO-A1-2011/014754
- WO-A2-2011/014770
- JP-A- 2007 177 345
- JP-A- 2007 182 661
- US-A1- 2009 069 499
- US-A1- 2009 202 826
- US-A1- 2012 028 062

## Description

### FIELD OF THE INVENTION

The present invention relates to composite structures having fibrous material made of carbon fibers and fibrous material made of glass fibers impregnated with a polyamide resin, processes for making them, and end use articles.

### BACKGROUND OF THE INVENTION

With the aim of replacing metal parts for weight saving and cost reduction while having comparable or superior mechanical performance, structures based on composite materials comprising a polymer matrix containing a fibrous material have been developed. With this growing interest, fiber reinforced plastic composite structures have been designed because of their excellent physical properties resulting from the combination of the fibrous material and the polymer matrix and are used in various end-use applications. Manufacturing techniques have been developed for improving the impregnation of the fibrous material with a polymer matrix to optimize the properties of the composite structure.

In highly demanding applications, such as for example structural parts in automotive and aerospace applications, composite materials are desired due to a unique combination of light weight, high strength and temperature resistance.

High performance composite structures can be obtained using thermosetting resins or thermoplastic resins as the polymer matrix. Thermoplastic-based composite structures present several advantages over thermoset-based composite structures including the ability to be post-formed or reprocessed by the application of heat and pressure. Additionally, less time is needed to make the composite structures because no curing step is required and they have increased potential for recycling.

Among thermoplastic resins, polyamides are particularly well suited for manufacturing composite structures. Thermoplastic polyamide compositions are desirable for use in a wide range of applications including parts used in automobiles, electrical/electronic parts, household appliances and furniture because of their good mechanical properties, heat resistance, impact and chemical resistance and because they may be conveniently and flexibly molded into a variety of articles of varying degrees of complexity and intricacy.

With the aim of improving the manufacturing process for making composite structures and integrated composite structures and allowing an easier, shorter and uniform mixing or impregnation of fibrous materials, several ways have been developed to decrease the melt viscosity of the polymer matrix. By having a low melt viscosity, polymer compositions flow faster and are thus easier to process. By reducing the melt viscosity of the polymer matrix, the time needed to reach the desired degree of mixing may be shortened, thereby increasing the overall manufacturing speed and thus leading to increased productivity.

However, the use of a low melt viscosity polyamide composition for improving or accelerating the mixing or impregnation of fibrous materials may lead to composite structures that are not ideal for highly demanding applications such as the automotive field due to inferior mechanical and heat aging properties.

Composite structures comprising fibrous material made of carbon fibers are particularly interesting in that the carbon fibers confer very good mechanical properties to the material. However, the impregnation of fibrous material made of carbon fibers with thermoplastic polymers can be particularly challenging. This is particularly true with fibrous material made of carbon fibers with high basis weight. This is usually due to the fact that carbon fibers have small fiber size and large number of fibers per bundle, but also this is also due to moderate incompatibility with polar polymers such as polyamides due to the low polarity of carbon fibers.

Therefore, there is still a need for a composite structure comprising a resin composition that can rapidly and efficiently impregnate a fibrous material made of carbon fibers and wherein the composite structure exhibits good mechanical properties.

US 2012/028062 A1 discloses PA-impregnated fibrous composite structures. US 2009/202826 A1 discloses fibrous composite structures impregnated with thermoset resin.

### SUMMARY OF THE INVENTION

There is disclosed and claimed herein a composite structure according to claim 1. Preferably, the polyamide resin in the polyamide resin composition is selected from the group consisting of PA6; PA11; PA12; PA4,6; PA6,6; PA6,10; PA6,12; PA10,10; PA6T; PA6I, PA6I/6T; PA66/6T; PAMXD6; PA6T/DT and copolymers and blends of the same.

Preferably, the polyamide resin in the polyamide resin composition has a weight average molecular weight greater than or equal to 15,000 g/mol, and more preferably, a weight average molecular weight greater than or equal to 25,000 g/mol.

Preferably, the fibrous material made of carbon fibers is a unidirectional non crimp fabric or a woven fabric and the fibrous material made of glass fibers is a woven fabric. Preferably the layer of fibrous material made of carbon fibers is a fabric made with carbon fibers having a tow size greater than or equal to 12,000 fillaments.

In a second aspect, the invention provides articles prepared from the composite structures of the invention.
In yet another aspect, the invention discloses and claims a process to manufacture the composite structure of the invention.

The process for making the composite structure of the present invention comprises the step of:
a) Providing two or more layers of a fibrous material made of carbon fibers with a basis weight greater than or equal to 150 g/m²
b) Providing one or more layer of a fibrous material made of glass fibers with a basis weight greater than or equal to 200 g/m² and
c) Providing a thermoplastic polyamide resin composition in the form of a film or powder, wherein the thermoplastic polyamide composition is placed between the layers of fibrous material made of carbon fibers and glass fibers
d) Impregnating the layers of fibrous material with the thermoplastic polyamide resin composition under heat and pressure
e) Cooling and subsequently recovering the composite structure.

### DETAILED DESCRIPTION

### Definitions

As used throughout the specification, the phrases "about" and "at or about" are intended to mean that the amount or value in question may be the value designated or some other value about the same. The phrase is intended to convey that similar values promote equivalent results or effects according to the invention.

As used herein, the term "fibrous material" means a material that is any suitable mat, fabric, or web form known to those skilled in the art. The fibers or strands used to form the fibrous material are interconnected (i.e. at least one fiber or strand is touching at least one other fiber or strand to form a continuous material) or touching each other so that a continuous mat, web or similar structure is formed.

As used herein, the term Fibrous layer "basis weight" refers to the weight per unit area of the dry fibrous layer.

The filament count in a fiber bundle or tow is useful in defining a carbon fiber tow size. Common sizes include 12,000 (12k) filaments per tow bundle, or 50,000 (50k) filaments per tow bundle.

As used herein, the term "impregnated" means the polyamide resin composition flows into the cavities and void spaces of the fibrous material.

### Composite Structure

The composite structures according to the present invention offer good mechanical properties, in particular flex modulus and flex strength, and they can be obtained in a cost effective way due to the faster impregnation of fibrous material made of carbon fibers.

The composite structure of the present invention comprises:
a) two or more layers of a fibrous material made of carbon fibers with a basis weight greater than or equal to 150 g/m²
b) one or more layer of a fibrous material made of glass fibers with a basis weight greater than or equal to 200 g/m² and
c) a polyamide resin composition
wherein the fibrous materials made of carbon and glass fibers are impregnated with the polyamide resin composition and wherein each of the external layers of the composite structure is a layer of fibrous material made of carbon fibers a).

In one aspect of the invention, the composite structure contains three layers of fibrous material impregnated with the polyamide resin composition with the following arrangement:
- one layer of a fibrous material made of carbon fibers with a basis weight greater than or equal to 150 g/m² (a)
- one layer of a fibrous material made of glass fibers with a basis weight greater than or equal to 200 g/m² (b)
- one layer of a fibrous material made of carbon fibers with a basis weight greater than or equal to 150 g/m² (a)

In another aspect of the invention, the composite structure contains five layers of fibrous material impregnated with the polyamide resin composition with the following arrangement:
- one layer of a fibrous material made of carbon fibers with a basis weight greater than or equal to 150 g/m² (a)
- three layers of a fibrous material made of glass fibers with a basis weight greater than or equal to 200 g/m² (b)
- one layer of a fibrous material made of carbon fibers with a basis weight greater than or equal to 150 g/m² (a)

In a further aspect of the invention, the composite structure contains six layers of fibrous material impregnated with the polyamide resin composition with the following arrangement:
- two layers of a fibrous material made of carbon fibers with a basis weight greater than or equal to 150 g/m² (a)
- two layers of a fibrous material made of glass fibers with a basis weight greater than or equal to 200 g/m² (b)
- two layers of a fibrous material made of carbon fibers with a basis weight greater than or equal to 150 g/m² (a)

In another aspect of the invention, the composite structure contains five layers of fibrous material impregnated with the polyamide resin composition with the following arrangement:
- one layer of a fibrous material made of woven glass fibers with a basis weight greater than or equal to 200 g/m² (a)
- two or more layers of a fibrous material made of carbon fibers with a basis weight greater than or equal to 150 g/m² (b)
- one layer of a fibrous material made of woven glass fibers with a basis weight greater than or equal to 200 g/m² (c)

In another aspect of the invention, the composite structure contains eight layers of fibrous material impregnated with the polyamide resin composition with the following symmetric arrangement:
- one layer of a fibrous material made of woven glass fibers with a basis weight greater than or equal to 200 g/m² (a)
- one or more layers of a fibrous material made of carbon fibers with a basis weight greater than or equal to 150 g/m² , optionally a weave based on 12k carbon, or optionally a UD based carbon non-crimp fabric (NCF) (b)
- one layer of a fibrous material made of woven glass fibers with a basis weight greater than or equal to 200 g/m² (c)
- one or more layers of a fibrous material made of carbon fibers with a basis weight greater than or equal to 150 g/m², optionally a weave based on 12k carbon, or optionally a UD based carbon NCF (d)

The composite structures are made by a process that comprises a step of impregnating the fibrous materials made of carbon fibers and the fibrous materials made of glass fibers with the polyamide resin composition. Preferably, the fibrous materials are impregnated with the polyamide resin composition by thermopressing. During thermopressing, the fibrous materials and the polyamide resin undergo heat and pressure in order to allow the polymers to melt and penetrate through the fibrous materials and, therefore, to impregnate said fibrous material.

Typically, thermopressing is made at a pressure between 2 and 100 bars and more preferably between 10 and 40 bars and a temperature which is above the melting point of the polyamide matrix resin composition and the polyamide surface resin composition, preferably at least about 20°C above the melting point to enable a proper impregnation. Heating may be done by a variety of means, including contact heating, radiant gas heating, infra red heating, convection or forced convection, induction heating, microwave heating or combinations thereof.

The process for making the composite structure of the present invention comprises the step of:
a) Providing two or more layers of a fibrous material made of carbon fibers with a basis weight greater than or equal to 150 g/m²
b) Providing one or more layer of a fibrous material made of glass fibers with a basis weight greater than or equal to 200 g/m² and
c) Providing a polyamide resin composition in the form of a film or powder, wherein the polyamide composition is placed between the layers of fibrous material made of carbon fibers and glass fibers
d) Impregnating the layers of fibrous material with the polyamide resin composition under heat and pressure
e) Cooling and subsequently recovering the composite structure.
The polyamide resin composition of step c) has a melt viscosity at 290°C of between 10 Pa s and 200 Pa s, preferably of between 50 Pa s and 150 Pa s, and preferably a weight average molecular weight greater than or equal to 15,000 g/mol.

This process is especially good for semi-continuous or continuous pressing methods like double belt pressing or continuous compression molding because of the need for rapid impregnation to make laminates at high rates to give high productivity.

In another preferred embodiment, the impregnation of the layers of fibrous material made of carbon and glass fibers of step d) is conducted until the obtention of a composite structure having a void content of less than a 2%, during a period of time of less than 2 minutes at temperatures above 320°C, preferably between 320°C and 350°c and also preferably between 360°c and 390°C, and pressures above 20 bar.

It has been found that the presence of fibrous material made of glass fibers allows a more rapid impregnation rate of the fibrous material made of carbon fibers which translates into a faster overall manufacturing cycle for the composite structure.

Pressure used during the impregnation process can be applied by a static process or by a continuous process (also known as a dynamic process), a continuous process being preferred for reasons of speed. Examples of impregnation processes include without limitation vacuum molding, in-mold coating, cross-die extrusion, pultrusion, wire coating type processes, lamination, stamping, diaphragm forming or press-molding, lamination being preferred.

One example of a process used to impregnate the fibrous material is a lamination process. The first step of the lamination process involves heat and pressure being applied to the fibrous material, the polyamide resin composition through opposing pressured rollers or belts in a heating zone, preferably followed by the continued application of pressure in a cooling zone to finalize consolidation and cool the impregnated fibrous material by pressurized means. Examples of lamination techniques include without limitation calendaring, flatbed lamination and double-belt press lamination. When lamination is used as the impregnating process, preferably a double-belt press is used for lamination.

The polyamide resin composition can also be applied to the fibrous materials by conventional means such as for example powder coating, film lamination, extrusion coating or a combination of two or more thereof, provided that the polyamide resin composition is applied on at least a portion of the surface of the composite structure.

During a powder coating process, a polymer powder which has been obtained by conventional grinding methods is applied to the fibrous materials. The powder may be applied onto the fibrous material by scattering, sprinkling, spraying, thermal or flame spraying, or fluidized bed coating methods. Multiple powder coating layers can be applied to the fibrous material. Optionally, the powder coating process may further comprise a step which consists in a post sintering step of the powder on the fibrous material. The polyamide resin composition is applied to the fibrous materials such that at least a portion of the surface of the composite structure comprises the polyamide resin composition. Subsequently, thermopressing is performed on the powder coated fibrous materials, with an optional preheating of the powder coated fibrous materials outside of the pressurized zone.

During film lamination, one or more films comprising the polyamide resin composition which have been obtained by conventional extrusion methods known in the art such as for example blow film extrusion, cast film extrusion and cast sheet extrusion are applied to one or more layers of the fibrous materials, e.g. by layering.. Subsequently, thermopressing is performed on the film laminate comprising the one or more films made of the polyamide resin composition and the fibrous materials. During thermopressing, the films melt and penetrate around the fibrous materials as a polymer continuum surrounding the fibrous materials with the polyamide resin.

During extrusion coating, pellets and/or granulates made of the polyamide resin composition are melted and extruded through one or more flat dies so as to form one or more melt curtains which are then applied onto the fibrous materials by laying down the one or more melt curtains in a manner similar to the film lamination procedure. Subsequently, thermopressing is performed on the layered structure to provide the composite structure of the invention.

Depending on the end-use application, the composite structure may be shaped into a desired geometry or configuration.

One process for shaping the composite structure comprises a step of shaping the composite structure after the impregnating step. Shaping the composite structure may be done by compression molding, stamping or any technique using heat and/or pressure, compression molding and stamping being preferred. Preferably, pressure is applied by using a hydraulic molding press. During compression molding or stamping, the composite structure is preheated to a temperature above the melt temperature of the polyamide resin composition by heated means and is transferred to a forming or shaping means such as a molding press containing a mold having a cavity of the shape of the final desired geometry whereby it is shaped into a desired configuration and is thereafter removed from the press or the mold after cooling to a temperature below the melt temperature of the polyamide resin composition.

### Fibrous Material

The fibrous materials of the present invention impregnated with the polyamide resin composition may be in any suitable mat, fabric, or web form known to those skilled in the art. Suitable examples of such fibrous materials include woven or nonwoven fabrics or mats, unidirectional strands of fiber, and the like. The composite structure contains multiple layers of fibrous materials which are impregnated with one or more polyamide resin compositions.

The fibrous material is preferably selected from woven or non-woven structures (e.g., mats, felts, fabrics and webs) textiles, fibrous battings, a mixture of two or more materials, and combinations thereof. Non-woven structures can be selected from random fiber orientation or aligned fibrous structures. Examples of random fiber orientation include without limitation material which can be in the form of a mat, a needled mat or a felt. Examples of aligned fibrous structures include without limitation unidirectional fiber strands, bidirectional strands, multidirectional strands, multiaxial textiles. Textiles can be selected from woven forms, knits, braids and combinations thereof.

As used herein, the term "a fibrous material being impregnated with a polyamide resin composition" means that the polyamide resin composition encapsulates and embeds the fibrous material so as to form an interpenetrating network of fibrous material substantially surrounded by the polyamide resin composition. For purposes herein, the term "fiber" is defined as a macroscopically homogeneous body having a high ratio of length to width across its cross-sectional area perpendicular to its length. The fiber cross section can be any shape, but is typically round or oval shaped.

Preferably, the fibrous material is selected from unidirectional non crimp fabric or a woven fabric, wherein said structures are made of carbon fibers. More preferably, the fibrous material made of carbon fibers is a woven fabric made with carbon fibers having a tow size greater than or equal to 12,000, preferably greater than or equal to 30,000.

Preferably, the fibrous material made of carbon fibers has a basis weight greater than or equal to 1500 g/m², more preferably greater than or equal to 300 g/m².

Preferably, the fibrous material is selected from woven structures, wherein said structures are made of glass fibers. Preferably, the fibrous material made of glass fibers has a basis weight greater than or equal to 200 g/m², more preferably greater than or equal to 300 g/m², and even more preferably greater than or equal to 500 g/m².

The fibrous material used in the composite structure of the invention cannot be chopped fibers or particles. To be clear, the fibrous material in the composite structure cannot be fibers or particles which are not interconnected to form a continuous mat, web or similar layered structure. In other words, they cannot be independent or single fibers or particles surrounded by the polyamide matrix resin composition.

Preferably, the ratio between the fibrous materials and the polyamide resin composition in the composite structure is between 40 to 75 weight percent fibrous material and more preferably between 65 and 75 weight percent fibrous material, the percentage being a weight-percentage based on the total weight of the composite structure. This corresponds to a ratio between the fibrous materials and the polyamide resin composition in the composite structure of between 40 and 60 percent fibrous material, the percentage being a volume-percentage based on the total volume of the first component structure or composite structure.

### Polyamide Resin Composition

Polyamide resins used in the manufacture of the composite structure of the invention are condensation products of one or more dicarboxylic acids and one or more diamines, and/or one or more aminocarboxylic acids, and/or ring-opening polymerization products of one or more cyclic lactams. The polyamide resins are selected from fully aliphatic polyamide resins, semi-aromatic polyamide resins and mixtures thereof. The term "semi-aromatic" describes polyamide resins that comprise at least some aromatic carboxylic acid monomer(s) and aliphatic diamine monomer(s), in comparison with "fully aliphatic" which describes polyamide resins comprising aliphatic carboxylic acid monomer(s) and aliphatic diamine monomer(s).

Fully aliphatic polyamide resins are formed from aliphatic and alicyclic monomers such as diamines, dicarboxylic acids, lactams, aminocarboxylic acids, and their reactive equivalents. A suitable aminocarboxylic acid includes 11-aminododecanoic acid. In the context of this invention, the term "fully aliphatic polyamide resin" refers to copolymers derived from two or more such monomers and blends of two or more fully aliphatic polyamide resins. Linear, branched, and cyclic monomers may be used.

Carboxylic acid monomers useful in the preparation of fully aliphatic polyamide resins include, but are not limited to, aliphatic carboxylic acids, such as for example adipic acid (C6), pimelic acid (C7), suberic acid (C8), azelaic acid (C9), sebacic acid (C10), dodecanedioic acid (C12) and tetradecanedioic acid (C14). Useful diamines include those having four or more carbon atoms, including, but not limited to tetramethylene diamine, hexamethylene diamine, octamethylene diamine, decamethylene diamine, 2-methylpentamethylene diamine, 2-ethyltetramethylene diamine, 2-methyloctamethylene diamine; trimethylhexamethylene diamine and/or mixtures thereof. Suitable examples of fully aliphatic polyamide resins include PA6; PA6,6; PA4,6; PA6,10; PA6,12; PA6,14; P 6,13; PA 6,15; PA6,16; PA11; PA 12; PA10; PA 9,12; PA9,13; PA9,14; PA9,15; PA6,16; PA9,36; PA10,10; PA10,12; PA10,13; PA10,14; PA12,10; PA12,12; PA12,13; PA12,14 and copolymers and blends of the same. Preferred examples of fully aliphatic polyamide resins comprised in the polyamide compositions described herein include PA6; PA11; PA12; PA4,6; PA6,6; PA,10; PA6,12; PA10,10 and copolymers and blends of the same.

Semi-aromatic polyamide resins are homopolymers, copolymers, terpolymers, or higher polymers wherein at least a portion of the acid monomers are selected from one or more aromatic carboxylic acids. The one or more aromatic carboxylic acids can be terephthalic acid or mixtures of terephthalic acid and one or more other carboxylic acids, like isophthalic acid, substituted phthalic acid such as for example 2-methylterephthalic acid and unsubstituted or substituted isomers of naphthalenedicarboxylic acid, wherein the carboxylic acid component preferably contains at least 55 mole percent of terephthalic acid (the mole percent being based on the carboxylic acid mixture). Preferably, the one or more aromatic carboxylic acids are selected from terephthalic acid, isophthalic acid and mixtures thereof and more preferably, the one or more carboxylic acids are mixtures of terephthalic acid and isophthalic acid, wherein the mixture preferably contains at least 55 mole percent of terephthalic acid. Furthermore, the one or more carboxylic acids can be mixed with one or more aliphatic carboxylic acids, like adipic acid; pimelic acid; suberic acid; azelaic acid; sebacic acid and dodecanedioic acid, adipic acid being preferred. More preferably the mixture of terephthalic acid and adipic acid comprised in the one or more carboxylic acids mixtures of the semi-aromatic polyamide resin contains at least 25 mole percent of terephthalic acid. Semi-aromatic polyamide resins comprise one or more diamines that can be chosen among diamines having four or more carbon atoms, including, but not limited to tetramethylene diamine, hexamethylene diamine, octamethylene diamine, nonamethylene diamine, decamethylene diamine, 2-methylpentamethylene diamine, 2-ethyltetramethylene diamine, 2-methyloctamethylene diamine; trimethylhexamethylene diamine, bis(*p*-aminocyclohexyl)methane; m-xylylene diamine; *p*-xylylene diamine and/or mixtures thereof. Suitable examples of semi-aromatic polyamide resins include poly(hexamethylene terephthalamide) (polyamide 6,T), poly(nonamethylene terephthalamide) (polyamide 9,T), poly(decamethylene terephthalamide) (polyamide 10,T), poly(dodecamethylene terephthalamide) (polyamide 12,T), hexamethylene adipamide/hexamethylene terephthalamide copolyamide (polyamide 6,T/6,6), hexamethylene terephthalamide/hexamethylene isophthalamide (6,T/6,I), poly(*m*-xylylene adipamide) (polyamide MXD,6), hexamethylene adipamide/hexamethylene terephthalamide copolyamide (polyamide 6,T/6,6), hexamethylene terephthalamide/2-methylpentamethylene terephthalamide copolyamide (polyamide 6,T/D,T), hexamethylene adipamide/hexamethylene terephthalamide/hexamethylene isophthalamide copolyamide (polyamide 6,6/6,T/6,I); poly(caprolactam- hexamethylene terephthalamide) (polyamide 6/6,T) and copolymers and blends of the same. Preferred examples of semi-aromatic polyamide resins comprised in the polyamide composition described herein include PA6,T; PA6,T/6,6, PA6,T/6,I; PAMXD,6; PA6,T/D,T and copolymers and blends of the same.

Preferred polyamide resin are selected from the group consisting of PA6, PA66 and PA6T/DT and copolymers and blends of the same.

Any combination of aliphatic or semi-aromatic polyamides can be used as the polyamide for the polyamide matrix resin composition, polyamide surface resin composition, and the polyamide resin of the second component. It is within the normal skill of one in the art to select appropriate combinations of polyamides depending on the end use.

The polyamide resin composition may further comprise one or more common additives, including, without limitation, ultraviolet light stabilizers, flame retardant agents, flow enhancing additives, lubricants, antistatic agents, coloring agents (including dyes, pigments, carbon black, and the like), nucleating agents, crystallization promoting agents and other processing aids or mixtures thereof known in the polymer compounding art.

Fillers, modifiers and other ingredients described above may be present in amounts and in forms well known in the art, including in the form of so-called nano-materials where at least one of the dimensions of the particles is in the range of 1 to 1000 nm.

Preferably, any additives used in the polyamide resin composition are well-dispersed within the polyamide resin. Any melt-mixing method may be used to combine the polyamide resins and additives of the present invention. For example, the polyamide resins and additives may be added to a melt mixer, such as, for example, a single or twin-screw extruder; a blender; a single or twin-screw kneader; or a Banbury mixer, either all at once through a single step addition, or in a stepwise fashion, and then melt-mixed. When adding the polyamide resins and additional additives in a stepwise fashion, part of the polyamide resin and/or additives are first added and melt-mixed with the remaining polyamide resin(s) and additives being subsequently added and further melt-mixed until a well-mixed or homogeneous composition is obtained.

In a preferred embodiment, the polyamide resins of the present invention have an average weight molecular weight greater than or equal to 15,000 g/mol.

The polyamide resin composition has a melt viscosity at 290°C of between 10 Pa s and 200 Pa s, preferably of between 50 Pa s and 150 Pa s, and preferably a weight average molecular weight greater than or equal to 15,000 g/mol.

The composite structures according to the present invention may be used in a wide variety of applications such as for example components for automobiles, trucks, commercial airplanes, aerospace, rail, household appliances, computer hardware, portable hand held electronic devices, recreation and sports equipment, structural component for machines, buildings, photovoltaic equipment or mechanical devices.

Examples of automotive applications include, without limitation, seating components and seating frames, engine cover brackets, engine cradles, suspension arms and cradles, spare tire wells, chassis reinforcement, floor pans, front-end modules, steering column frames, instrument panels, door systems, body panels (such as horizontal body panels and door panels), tailgates, hardtop frame structures, convertible top frame structures, roofing structures, engine covers, housings for transmission and power delivery components, oil pans, airbag housing canisters, automotive interior impact structures, engine support brackets, cross car beams, bumper beams, pedestrian safety beams, firewalls, rear parcel shelves, cross vehicle bulkheads, pressure vessels such as refrigerant bottles, fire extinguishers, and truck compressed air brake system vessels, hybrid internal combustion/electric or electric vehicle battery trays, automotive suspension wishbone and control arms, suspension stabilizer links, leaf springs, vehicle wheels, recreational vehicle and motorcycle swing arms, fenders, roofing frames and tank flaps.

Examples of household appliances include without limitation washers, dryers, refrigerators, air conditioning and heating. Examples of recreation and sports include without limitation inline-skate components, baseball bats, hockey sticks, ski and snowboard bindings, rucksack backs and frames, and bicycle frames. Examples of structural components for machines include electrical/electronic parts such as for example housings for hand held electronic devices, and computers.

Preferably, the composite structures of the invention are used as under the hood automotive components where high temperature environments exist.

### EXAMPLES

The following materials were used for preparing examples (abbreviated as "E" in the table) of composites structures according to the present invention and comparative examples (abbreviated as "C" in the table) of composite structures.

### Polyamide resin composition

The PA1 resin used in all the tables is 75wt% PA66 blended with 25wt% PA6. The PA6 is Ultramid B27 from BASF, Co. The PA66 is a heat stabilized polyamide comprising adipic acid and 1,6-hexamethylenediamine with a weight average molecular weight of around 32000 g/mol. PA66 has a melting point of about 260°C to about 265°C and a glass transition of about 40°C to about 70°C, measured by DSC Instrument first heating scan at 10 °C/min. PA66 is commercially available from E. I. du Pont de Nemours and Company, Wilmington, Delaware. The melt viscosity at a shear rate of 1000 s⁻¹ and 290°C of this PA1 based resin is 50 Pa s.

**PA6T/DT:** a polyamide made of terephtalic acid and 1,6-hexamethylenediamine (HMD) and 2-methylpentamethylenediamine (MPMD) (HMD:MPMD = 50:50). PA6T/DT has a melting point of about 297°C to about 303°C and a glass transition temperature of about 130 °C to about 145 °C. This semi-aromatic polyamide is called PA6TDT and is commercially available from E. I. du Pont de Nemours and Company, Wilmington, Delaware. The melt viscosity at a shear rate of 1000 s⁻¹ and 325°C of this PA6T/DT based resin is 140 Pa s. The weight average molecular weight of this resin is 25,000 g/mol.

### Initially resin free Fibrous materials made of Carbon Fibers (CF):

i) 370 g/m² 2x2 plain weave fabric using 12k Grafil 34 700WD tow
ii) 150 g/m² UniDirectional Non-Crimp Fabric (UD NCF) CF made with Zoltek 50k CF tow
iii) 300 g/m² UD NCF CF made with Zoltek 50k tow

### Fibrous material made of Glass Fibers (GF):

i) 300 g/m² 2x2 twill weave fabric from Hexcel.
ii) 600 g/m² 2x2 plain weave fabric from PPG 4510 1200tex fibers

### Preparation of composite structures: method for lamination to evaluate impregnation rates

Examples E1 to E8 and comparative examples C1 to C5 were made by stacking 5.5" x 5.5" layers of fibrous materials, with the desired arrangement, with alternating layers of polyamide thermoplastic films to give the desired ratio of polyamide resin to fiber. Square "gaskets" of 0.004" Thermount aramid paper (DuPont, Co.) with an OD of 5" and an ID of 4.3" were placed on both outer sides of the fibrous material/polyamide resin stack, then the entire assembly was placed between treated steel 1/16" plates with an anti-stick spray, and inserted in a 8" x 8" manual hydraulic Carver press where heating to the desired temperature (330°C- 375°C) occurred in about 30 s under 25 bar pressure as was indicated by a thermocouple imbedded in the composite structure. An additional 150 s at 25 bar at this set temperature was applied to give the combined 3 minute melt "impregnation time", i.e., during this entire time the sample is at the desired melt temperature for only about 150s out of the total 180 s. For other shorter "impregnation times" in the tables, the same 30 s heat-up time is included in the total times. An adjacent cold press was used to quench the initially molten composite structure in order to freeze the sample under pressure at 25 bar, and retain complete consolidation.

### Examples and Comparative Examples

**Comparative example C1**is a 100% CF fabric composite structure comprising 3 layers of a 2x2 plain weave CF fabric (basis weight 370 g/m²). This woven CF fabric used Grafil 12k tows. Lamination was performed at 330°C and 25 bar, and the total impregnation time was 1.5 minutes. The fibrous materials were impregnated with PA1. The weight percent thermoplastic PA 66 to fiber was 33%.

**Example E1** is a CF/ GF hybrid composite structure comprising 2 layers of a 2x2 plain weave 370 g/m² CF fabric combined with 3 layers of 300 g/m² 2x2 woven glass fabric. The order of the layers in the laminate stack was C/G/G/G/C, wherein C stands for the layer made of carbon fibers and G stands for the layer made of glass fibers. The fibrous materials were impregnated with PA1. The woven CF fabric used Grafil 12k tows. Lamination conditions were the same as in C1. The weight percent thermoplastic PA1 to fiber was 32%.

**Comparative example C2** is a 100% CF composite structure comprising 4 layers of UD NCF CF fabric (300 g/m²) oriented in 0/90/0/90 directions. Lamination was performed at 330°C and 25 bar, and the impregnation time was 3 minutes. The fibrous materials were impregnated with PA1. The weight percent thermoplastic PA1 to fiber was 35%.

**Comparative example C3** is a 100% CF composite structure comprising 4 layers of UD NCF CF fabric (300 g/m²) oriented in 0/90/0/90 directions. Lamination conditions were the same as in comparative example C2. The fibrous materials were impregnated with PA1. The weight percent thermoplastic PA1 to fiber was 30%.

**Example E2** is a CF/ GF hybrid composite structure comprising 2 layers of UD NCF CF fabric (300 g/m²) oriented in the same direction, combined with 1 layer of 600 g/m² 2x2 woven glass fabric. The order of the layers in the laminate stack was C/G/C. The fibrous materials were impregnated with PA1. Lamination conditions were the same as in comparative example C2. The weight percent thermoplastic PA1 to fiber was 28%.

**Comparative example C4** is a 100% CF composite structure comprising 6 layers of UD NCF CF fabric (150 g/m²) oriented in 0/90/0/90/0/90 directions. The fibrous materials were impregnated with PA1. Lamination conditions were the same as in **comparative example C2.** The weight percent thermoplastic PA1 to fiber was 35%.

**Comparative example C5** is a 100% CF composite structure comprising 6 layers of UD NCF CF fabric (150 g/m²) oriented in 0/90/0/90/0/90 directions. The fibrous materials were impregnated with PA1.Lamination conditions were the same as in comparative example **C2** The weight percent thermoplastic PA1 to fiber was 34%.

**Example E3** is CF/ GF hybrid composite structure comprising 4 layers of UD NCF CF fabric (150 g/m²) oriented 0/90 at both outer surfaces of the laminate, combined with 2 layers of 300 g/m² 2x2 woven glass fabric. The order of the layers in the laminate stack was C/C/G/G/C/C. The fibrous materials were impregnated with PA1. Lamination conditions were the same as in comparative example C2. The weight percent thermoplastic PA1 to fiber was 31%.

**Example E4** is CF/ GF hybrid composite structure comprising 4 layers of UD NCF CF fabric (150 g/m²) oriented 0/90 at both outer surfaces of the laminate, combined with 2 layers of 300 g/m² 2x2 woven glass fabric. The order of the layers in the laminate stack was C/C/G/G/C/C. The fibrous materials were impregnated with PA1. Lamination conditions were the same as in comparative example C2. The weight percent thermoplastic PA1 to fiber was 32%.

**Example E5** is CF/ GF hybrid composite structure comprising 4 layers of UD NCF CF fabric (150 g/m²) that were all oriented in the same direction, combined with 2 layers of 300 g/m² 2x2 woven glass fabric. The order of the layers in the laminate stack was C/C/G/G/C/C. The fibrous materials were impregnated with PA1. Lamination conditions were the same as in comparative example C2. The weight percent thermoplastic PA1 to fiber was 30%.

**Example E6** is CF/ GF hybrid composite structure comprising 2 layers of UD NCF CF fabric (150 g/m²) that were all oriented in the same direction, combined with 4 layers of 300 g/m² 2x2 woven glass fabric. The order of the layers in the laminate stack was G/C/G/G/C/G. The fibrous materials were impregnated with PA1. Lamination conditions were the same as in comparative example C2. The weight percent thermoplastic PA1 to fiber was 30%.

**Example E7** is CF/ GF hybrid composite structure comprising 2 layers of UD NCF CF fabric (150 g/m2) that were all oriented in the same direction, combined with 4 layers of 300 g/m2 2x2 woven glass fabric. The order of the layers in the laminate stack was G/C/G/G/C/G. The fibrous materials were impregnated with PA6T/DT. Lamination was performed at 375°C and 25 bar, and the impregnation time was 3 minutes. The weight percent thermoplastic aromatic polyamide PA6T/DT to fiber was 30%.

**Example E8** is CF/ GF hybrid composite structure comprising 4 layers of UD NCF CF fabric (150 g/m²) that were all oriented in the same direction, combined with 2 layers of 300 g/m² 2x2 woven glass fabric. The order of the layers in the laminate stack was C/C/G/G/C/C. The fibrous materials were impregnated with PA6T/DT. Lamination was performed at 375°C and 25 bar, and the impregnation time was 3 minutes. The weight percent thermoplastic aromatic polyamide PA6T/DT to fiber was 30%.

### Method for flex mechanical property measurement using 3 point bending

The test speed was 1 mm/min. The Flex modulus was calculated from the slope of the linear region generally below 1.25 % strain. The span length to laminate (composite structure) thickness ratio was 16. For example, for sample with a thickness of 1.5 mm, a span length between supports was 24 mm. The radius of the loading edge was 1 mm. Radii of the supports were 2 mm.

### %Void determination

With a known and constant area weight of fabrics, measurement of composite density is accomplished by determining the composite structure volume and mass. The volume is determined by measuring length, width and thickness by a micrometer, and the weight is measured on an electrobalance. Thus, this composite density can be used along with the known fiber weight fraction (s) to determine the %voids.

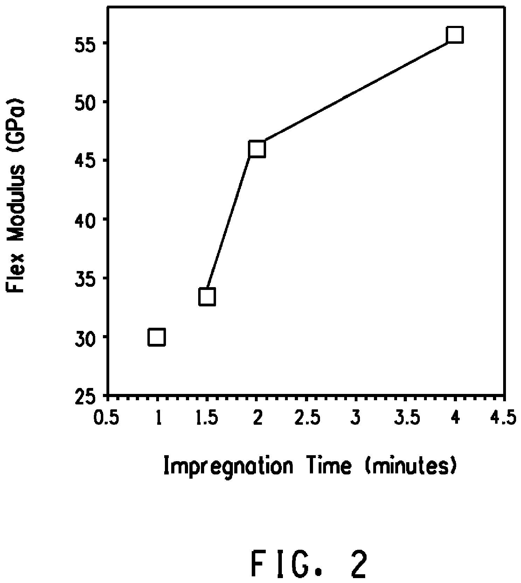

Figure 2 shows that longer impregnation times for the carbon fabric/PA1 composite structures leads to higher flex modulus because of lower void%. As confirmed by Table 1, this figure shows that 1.5 minutes leads to poorly impregnated laminates.

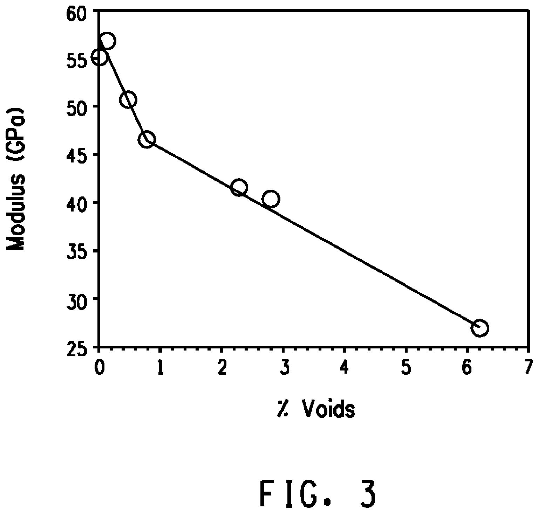

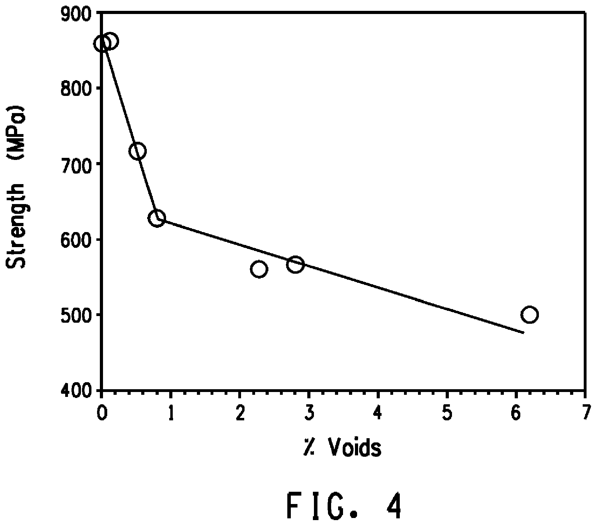

It is shown in table 1 that a 100% CF woven fabric composite structure has a void content of 3.5% voids (comparative example C1 in Table 1) at an impregnation time of 1.5 minutes. These voids cause fairly low flex strength and modulus of 550 MPa and 33 GPa, respectively, even though at zero voids with this 100% carbon composite structure we measure strength and modulus of 850 MPa and 55 GPa, respectively (Figures 3 and 4). This can be compared with example E1 where a carbon fabric/glass fabric/carbon fabric hybrid was laminated under the same 1.5 minute impregnation conditions. This sample has very low voids (1.2% voids). The low voids results in very high flex strength and modulus of 700 MPa and 44.5 GPa, respectively for example E1. The flex modulus of a hundred percent woven glass fabric composite with the same fiber volume fraction is about 20 GPa. It is clear both from the measured % voids and the flex moduli that E1 has a higher level of impregnation than C1. The structures in example E1 were also made on a double belt press (Held, Co., Germany) with lower than 1%voids, while the structure made with 100% carbon fabric like C1 under the same conditions had void content greater than 3%.

In Table 2 it is seen that 100% CF composite structures where all the fibrous layers are 0/90 cross-plied UD NCF CF (basis weight 300 g/m²) non-woven fabric layers result in around 5% voids (comparative examples C2 and C3). For C3 these voids cause lower strength and modulus of 415 MPa and 36 GPa, respectively. This can be compared with example E2 which is a CF/GF/CF hybrid where the fibrous material made of carbon fibers is a UD NCF fabric (300 g/m²). This sample impregnates to essentially zero voids with very high strength and modulus of 1020 MPa and 78 GPa, respectively, and 1% voids.

In Table 3 it is seen that 100% CF composite structures where all the fibrous layers are 0/90 cross-plied UD NCF CF (150 g/m²) non-woven fabric layers result in 3.3 to 5% voids (comparative examples C4 and C5). For C4 and C5 these voids cause low moduli as is indicated in Table 3. This can be compared with examples E3 and E4 where glass fabric layers are introduced into the center of the composite structure while retaining the 0/90 oriented UD NCF CF (150 g/m²) layers on both outer surfaces. Because the glass fabrics are present, examples E3 and E4 show impregnation to essentially 1.3% or zero voids with indicated relatively high moduli.

Table 4 shows related well impregnated GF/CF hybrid composite structures with low voids. Examples E5, E6 in this table were laminated under the same conditions as in Tables 2 and 3, and show far better impregnation than 100% carbon composite structures in Table 3. Example E7 and E8 used the same 3 minute impregnation times as were used with examples E5. E6, but an aromatic high temperature polyamide PA6T/DT resin was used which required 370°C pressing temperatures. The strengths in Table 4 are very high regardless of resin where both PA1 and aromatic high temperature polyamide PA6T/DT were used. Furthermore, the data illustrate that high impregnation levels are obtained regardless of whether the fibrous material made of carbon fibers is at the surface, or in the inner layers of the composite structure. Similar structures to examples E5 and E6 were also made on a double belt press (Held, Co., Germany) with lower than 1%voids at 1 m/min lamination belt rates, 365°C, and 40 bar.this invention is directed to provide means to reduce impregnation times and improve cost efficiency by adding lower cost glass. This is achieved by using approximate alternate fibrous layers of carbon and glass fibrous layers to accelerate the impregnation rate of viscous resins into the fibrous carbon layer.

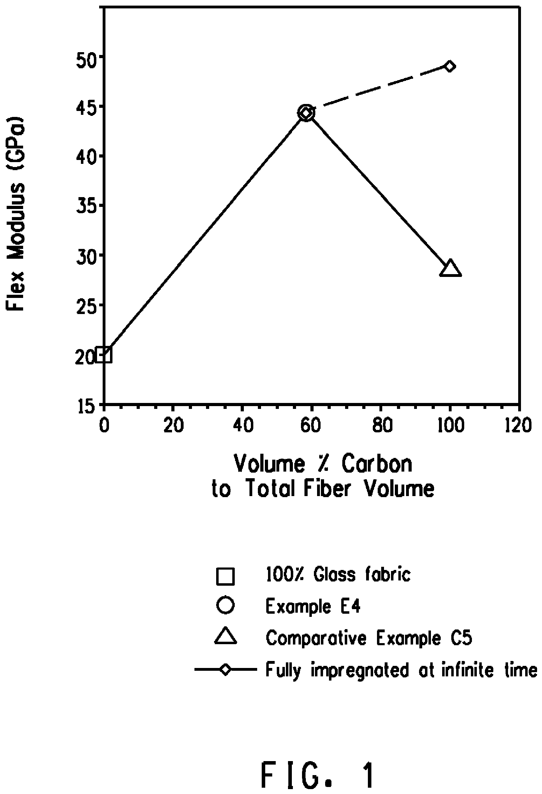

With smooth and flat carbon fiber structures including woven fabrics, UniDirectional Non-Crimp Fabric (UD NCF) fabrics , resin coated pre-preg fabrics, and related smooth and flat non-woven CF structures, we have found that roughly alternating these carbon fibrous layers with layers of rough and polar glass fabric so that they are adjacent to the fibrous carbon layers leads to accelerated impregnation during, pressing into solid multi-layer thermoplastic composite laminates relative to 100% carbon laminates of the same carbon structures described above. This is shown in Figure 1 where at 42 vol% carbon fiber relative to total fiber volume, the fully impregnated state of this hybrid glass and carbon fiber laminate has higher flex modulus than the 100% carbon fiber laminate with the same surface composition and orientation, where both were made at constant lamination times of 3 minutes. This is because of the higher impregnation rate of the carbon layers of this hybrid glass/carbon fiber laminate.

**Table 1**

| | **C1** | **E1** |
|---|---|---|
| Layer Structure | C/C/C | C/G/G/G/C |
| carbon orientation | no | no |
| carbon/glass wt/wt ratio | 100 | 45 |
| Vol% glass to total fiber volume | 0 | 46 |
| Polyamide resin | PA1 | PA1 |
| wt% polyamide resin | 33 | 32 |
| Flex Modulus (GPa) | 33 | 44.5 |
| Flex Strength (MPa) | 550 | 700 |
| void% | 3.5 | 1.2 |

**Table 2**

| | **C2** | **C3** | **E2** |
|---|---|---|---|
| Layer Structure | C/C/C/C | C/C/C/C | C/G/C |
| carbon orientation | no | no | yes |
| carbon/glass wt/wt ratio | 100 | 100 | 52 |
| Vol% glass to total fiber volume | 0 | 0 | 41 |
| Polyamide resin | PA1 | PA1 | PA1 |
| wt% polyamide resin | 35 | 30 | 28 |
| Flex Modulus (GPa) | 30 | 36.0 | 78.0 |
| Flex Strength (MPa) | 630 | 415.0 | 1020.0 |
| void% | 4.5 | 5 | 1 |

**Table 3**

| | **C4** | **C5** | **E3** | **E4** |
|---|---|---|---|---|
| Layer Structure | C/C/C/C/C/C | C/C/C/C/C/C | C/C/G/G/C/C | C/C/G/G/C/C |
| carbon orientation | No | no | no | no |
| carbon/glass wt/wt ratio | 100 | 100.0 | 50 | 33 |
| Vol% glass to total fiber volume | 0 | 0 | 41 | 58 |
| Polyamide resin | PA1 | PA1 | PA1 | PA1 |
| wt% polyamide resin | 35 | 34 | 31 | 32 |
| Flex Modulus (GPa) | 38.2 | 28.8 | 38.9 | 44.3 |
| Flex Strength (MPa) | 755 | 565.0 | 655 | 675 |
| void% | 5 | 3.3 | 1.3 | 0 |

**Table 4**

| | **E5** | **E6** | **E7** | **E8** |
|---|---|---|---|---|
| Layer Structure | C/C/G/G/C/C | G/C/G/G/C/G | G/C/G/G/C/G | C/C/G/G/C/C |
| carbon orientation | Yes | y | y | y |
| carbon/glass wt/wt ratio | 50 | 20 | 20 | 50 |
| Vol% glass to total fiber volume | 41 | 73 | 73 | 41 |
| Polyamide resin | PA1 | PA1 | PA6T/DT | PA6T/DT |
| wt% polyamide resin | 30 | 30 | 30 | 30 |
| Flex Modulus (GPa) | 67.8 | 31.2 | 33.2 | 96 |
| Flex Strength (MPa) | 980 | 884 | 918 | 995 |
| void% | 1 | 0 | 1 | 0 |

## Claims

1. A composite structure comprising:
(a) two or more layers of a fibrous material made of carbon fibers with a basis weight greater than or equal to 150 g/m² ;
(b) one or more layer of a fibrous material made of glass fibers with a basis weight greater than or equal to 200 g/m²; and
(c) a thermoplastic polyamide resin composition, wherein the polyamide resin has a melt viscosity at 290 °C of between 10 Pa.s and 200 Pa.s,
wherein the fibrous materials made of carbon and glass fibers are impregnated with the thermoplastic polyamide resin composition and wherein each of the external layers of the composite structure is a layer of fibrous material made of carbon fibers a).

2. The composite structure of claim 1, wherein the thermoplastic polyamide resin in the thermoplastic polyamide resin composition is selected from the group consisting of PA6; PA11; PA12; PA4,6; PA6,6; PA6,10; PA6,12; PA10,10; PA6T; PA6I, PA6I/6T; PA66/6T; PAMXD6; PA6T/DT and copolymers and blends of the same.

3. The composite structure of any of the preceding claims, wherein the thermoplastic polyamide resin in the thermoplastic polyamide resin composition has a weight average molecular weight greater than or equal to 15,000 g/mol.

4. The composite structure of any of the preceding claims, wherein the thermoplastic polyamide resin in the thermoplastic polyamide resin composition has a weight average molecular weight greater than or equal to 25,000 g/mol.

5. The composite structure of any of the preceding claims, wherein the layer of fibrous material made of carbon fibers is a unidirectional non crimp fabric or a woven fabric.

6. The composite structure of any of the preceding claims, wherein the layer of fibrous material made of carbon fibers is a woven fabric made with carbon fibers having a tow size greater than or equal to 12,000.

7. The composite structure of any of the preceding claims wherein the layer of fibrous material made of glass fibers is a woven fabric.

8. The composite structure of any of the preceding claims wherein the layer of fibrous material made of carbon fibers has a basis weight greater than or equal to 300 g/m².

9. The composite structure of any of the preceding claims wherein the layer of fibrous material made of glass fibers has a basis weight greater than or equal to 500 g/m².

10. The composite structure of any of the preceding claims wherein the fibrous material made of carbon and glass fibers is from 40 weight percent to 75 weight percent of the total weight of the composite structure.

11. The composite structure of any of the preceding claims wherein the void content of the composite structure is lower than or equal to 2%.

12. The composite structure of any of the preceding claims wherein the thermoplastic polyamide resin composition further comprise one or more impact modifiers, one or more oxidative stabilizers, one or more reinforcing agents, one or more ultraviolet light stabilizers, one or more flame retardant agents or mixtures thereof.

13. An article made from the composite structure of any of the preceding claims.

14. The article of claim 13 in the form of components for automobiles, trucks, commercial airplanes, aerospace, rail, household appliances, computer hardware, hand held devices, recreation and sports, structural component for machines, structural components for buildings, structural components for photovoltaic equipments or structural components for mechanical devices.

15. A process for making a composite structure, comprising the step of:
a) Providing two or more layers of a fibrous material made of carbon fibers with a basis weight greater than or equal to 150 g/m²
b) Providing one or more layer of a fibrous material made of glass fibers with a basis weight greater than or equal to 200 g/m² and
c) Providing a thermoplastic polyamide resin composition in the form of a film or powder, wherein the thermoplastic polyamide composition is placed between the layers of fibrous material made of carbon fibers and glass fibers
d) Impregnating the layers of fibrous material with the thermoplastic polyamide resin composition under heat and pressure
e) Cooling and subsequently recovering the composite structure.

## Patentansprüche

1. Verbundstruktur umfassend:
(a) zwei oder mehr Schichten eines faserigen Materials, das aus Kohlenstofffasern mit einem Flächengewicht von mehr als oder gleich 150 g/m² hergestellt ist;
(b) eine oder mehr Schichten eines faserigen Materials, das aus Glasfasern mit einem Flächengewicht von mehr als oder gleich 200 g/m² hergestellt ist; und
(c) eine thermoplastische Polyamidharzzusammensetzung,
wobei das Polyamidharz eine Schmelzviskosität bei 290 °C zwischen 10 Pa.s und 200 Pa.s aufweist,
wobei die faserigen Materialien, die aus Kohlenstoff- und Glasfasern hergestellt sind, mit der thermoplastischen Polyamidharzzusammensetzung imprägniert werden und wobei jede der äußeren Schichten der Verbundstruktur eine Schicht von faserigem Material ist, das aus Kohlenstofffasern a) hergestellt ist.

2. Verbundstruktur nach Anspruch 1, wobei das thermoplastische Polyamidharz in der thermoplastischen Polyamidharzzusammensetzung aus der Gruppe ausgewählt ist bestehend aus PA6; PA11; PA12; PA4,6; PA6,6; PA6,10; PA6,12; PA10,10; PA6T; PA6I, PA6I/6T; PA66/6T; PAMXD6; PA6T/DT und Copolymeren und Mischungen derselben.

3. Verbundstruktur nach einem der vorhergehenden Ansprüche, wobei das thermoplastische Polyamidharz in der thermoplastischen Polyamidharzzusammensetzung ein gewichtsdurchschnittliches Molekulargewicht von mehr als oder gleich 15.000 g/Mol aufweist.

4. Verbundstruktur nach einem der vorhergehenden Ansprüche, wobei das thermoplastische Polyamidharz in der thermoplastischen Polyamidharzzusammensetzung ein gewichtsdurchschnittliches Molekulargewicht von mehr als oder gleich 25.000 g/Mol aufweist.

5. Verbundstruktur nach einem der vorhergehenden Ansprüche, wobei die Schicht von faserigem Material, das aus Kohlenstofffasern hergestellt ist, ein unidirektionaler, nichtkräuselnder Textilstoff oder Gewebe ist.

6. Verbundstruktur nach einem der vorhergehenden Ansprüche, wobei die Schicht von faserigem Material, das aus Kohlenstofffasern hergestellt ist, ein Gewebe ist, das mit Kohlenstofffasern, die eine Werggröße von mehr als oder gleich 12.000 aufweisen, hergestellt ist.

7. Verbundstruktur nach einem der vorhergehenden Ansprüche, wobei die Schicht von faserigem Material, das aus Glasfasern hergestellt ist, ein Gewebe ist.

8. Verbundstruktur nach einem der vorhergehenden Ansprüche, wobei die Schicht von faserigem Material, das aus Kohlenstofffasern hergestellt ist, ein Flächengewicht von mehr als oder gleich 300 g/m² aufweist.

9. Verbundstruktur nach einem der vorhergehenden Ansprüche, wobei die Schicht von faserigem Material, das aus Glasfasern hergestellt ist, ein Flächengewicht von mehr als oder gleich 500 g/m² aufweist.

10. Verbundstruktur nach einem der vorhergehenden Ansprüche, wobei das faserige Material, das aus Kohlenstoff- und Glasfasern hergestellt ist, 40 Gewichtsprozent bis 75 Gewichtsprozent des Gesamtgewichts der Verbundstruktur beträgt.

11. Verbundstruktur nach einem der vorhergehenden Ansprüche, wobei der Hohlraumgehalt der Verbundstruktur geringer als oder gleich 2 % ist.

12. Verbundstruktur nach einem der vorhergehenden Ansprüche, wobei die thermoplastische Polyamidharzzusammensetzung ferner ein oder mehr Schlagzähmodifiziermittel, einen oder mehr oxidative Stabilisatoren, ein oder mehr Verstärkungsmittel, einen oder mehr Ultraviolettlichtstabilisatoren, ein oder mehr Feuerschutzmittel oder Mischungen davon umfasst.

13. Artikel, der aus der Verbundstruktur nach einem der vorhergehenden Ansprüche hergestellt ist.

14. Artikel nach Anspruch 13 in Form von Komponenten für Fahrzeuge, Lastwagen, Verkehrsflugzeuge, Luft- und Raumfahrt, Eisenbahn, Haushaltgeräte, Computer-Hardware, Handheld-Geräte, Erholungs- und Sportartikel, Bauteile für Maschinen, Bauteile für Gebäude, Bauteile für photovoltaische Geräte oder Bauteile für mechanische Vorrichtungen.

15. Verfahren zum Herstellen einer Verbundstruktur, umfassend den Schritt des:
a) Bereitstellens von zwei oder mehr Schichten eines faserigen Materials, das aus Kohlenstofffasern mit einem Flächengewicht von mehr als oder gleich 150 g/m² hergestellt ist;
(b) Bereitstellens von einer oder mehr Schichten eines faserigen Materials, das aus Glasfasern mit einem Flächengewicht von mehr als oder gleich 200 g/m² hergestellt ist; und
(c) Bereitstellens einer thermoplastischen Polyamidharzzusammensetzung in Form einer Folie oder eines Pulvers, wobei die thermoplastische Polyamidharzzusammensetzung zwischen die Schichten von faserigem Material, das aus Kohlenstofffasern und Glasfasern hergestellt ist, positioniert wird,
d) Imprägnierens der Schichten von faserigen Material mit der thermoplastischen Polyamidharzzusammensetzung unter Hitze und Druck,
e) Kühlens und daraufhin Gewinnens der Verbundstruktur.

## Revendications

1. Structure composite comprenant:
(a) deux ou plusieurs couches d'un matériau fibreux constitué de fibres de carbone avec un poids de base supérieur ou égal à 150 g/m²;
(b) une ou plusieurs couches d'un matériau fibreux constitué de fibres de verre avec un poids de base supérieur ou égal à 200 g/m²; et
(c) une composition de résine de polyamide thermoplastique,
la résine de polyamide ayant une viscosité à l'état fondu à 290°C comprise entre 10 Pa•s et 200 Pa•s,
les matériaux fibreux constitués de carbone et de fibres de verre étant imprégnées de la composition de résine de polyamide thermoplastique et chacune des couches externes de la structure composite étant une couche de matériau fibreux constitué de fibres de carbone a).

2. Structure composite selon la revendication 1, la résine de polyamide thermoplastique dans la composition de résine de polyamide thermoplastique étant sélectionnée dans le groupe constitué de PA6; PA11; PA12; PA4,6; PA6,6; PA6,10; PA6,12; PA10,10; PA6T; PA6I, PA6I/6T; PA66/6T; PAMXD6; PA6T/DT et des copolymères et de leurs mélanges.

3. Structure composite selon l'une quelconque des revendications précédentes, la résine de polyamide thermoplastique dans la composition de résine de polyamide thermoplastique ayant un poids moléculaire moyen en poids supérieur ou égal à 15 000 g/mole.

4. Structure composite selon l'une quelconque des revendications précédentes, la résine de polyamide thermoplastique dans la composition de résine de polyamide thermoplastique ayant un poids moléculaire moyen en poids supérieur ou égal à 25 000 g/mole.

5. Structure composite selon l'une quelconque des revendications précédentes, dans laquelle la couche de matériau fibreux constitué de fibres de carbone est un textile unidirectionnel non frisé ou un textile tissé.

6. Structure composite selon l'une quelconque des revendications précédentes, dans laquelle la couche de matériau fibreux constitué de fibres de carbone est un textile tissé constitué de fibres de carbone ayant une taille d'étoupe supérieure ou égale à 12 000.

7. Structure composite selon l'une quelconque des revendications précédentes dans laquelle la couche de matériau fibreux constitué de fibres de verre est un textile tissé.

8. Structure composite selon l'une quelconque des revendications précédentes dans laquelle la couche de matériau fibreux constitué de fibres de carbone présente un poids de base supérieur ou égal à 300 g/m².

9. Structure composite selon l'une quelconque des revendications précédentes dans laquelle la couche de matériau fibreux constitué de fibres de verre présente un poids de base supérieur ou égal à 500 g/m².

10. Structure composite selon l'une quelconque des revendications précédentes dans laquelle le matériau fibreux constitué de carbone et de fibres de verre est de 40 pour cent en poids à 75 pour cent en poids du poids total de la structure composite.

11. Structure composite selon l'une quelconque des revendications précédentes dans laquelle la teneur des vides de la structure composite est inférieure ou égale à 2 %.

12. Structure composite selon l'une quelconque des revendications précédentes dans laquelle la composition de résine de polyamide thermoplastique comprend en outre un ou plusieurs modificateurs d'impact, un ou plusieurs agents stabilisants de l'oxydation, un ou plusieurs agents de renfort, un ou plusieurs agents stabilisant la lumière ultraviolette, un ou plusieurs agents ignifuges ou de mélanges de ceux-ci.

13. Article constitué de la structure composite selon l'une quelconque des revendications précédentes.

14. Article selon la revendication 13 se présentant sous la forme de composants pour automobiles, camions, aéronefs commerciaux, l'aérospatiale, le domaine ferroviaire, les appareils ménagers, les équipements informatiques, les dispositifs pouvant être tenus à la main, le domaine des loisirs et des sports, les composants structurels pour machines, les composants structurels pour le bâtiment, les composants structurels pour les équipements photovoltaïques ou les composants structurels pour les dispositifs mécaniques.

15. Procédé de fabrication d'une structure composite, comprenant l'étape de:
a) fourniture de deux ou plusieurs couches d'un matériau fibreux constitué de fibres de carbone avec un poids de base supérieur ou égal à 150 g/m²
b) fourniture d'une ou plusieurs couches d'un matériau fibreux constitué de fibres de verre avec un poids de base supérieur ou égal à 200 g/m² et
c) fourniture d'une composition de résine de polyamide thermoplastique sous la forme d'un film ou d'une poudre, la composition de polyamide thermoplastique étant placée entre les couches de matériau fibreux constitué de fibres de carbone et de fibres de verre
d) imprégnation des couches de matériau fibreux avec la composition de résine de polyamide thermoplastique sous chaleur et pression
e) refroidissement et récupération par la suite de la structure composite.
